# EUROPÄISCHE PATENTSCHRIFT

(11) **EP 1 862 337 B1**
(45) Veröffentlichungstag und Bekanntmachung des Hinweises auf die Patenterteilung: **01.08.2012**
(21) Anmeldenummer: 07009898.3
(22) Anmeldetag: 18.05.2007
(51) Int. Cl.: B60G 13/08, B60G 17/044, B60G 17/08, F16F 9/516, F16F 9/58

(54) **Verfahren zur Niveauregulierung bei einem Kraftfahrzeug**
Method for level adjustment for a motor vehicle
Procédé de régulation du niveau pour un véhicule automobile

(30) Priorität: 01.06.2006 DE 102006025576
(43) Veröffentlichungstag der Anmeldung: 05.12.2007
(73) Patentinhaber: ZF Friedrichshafen AG, 88046 Friedrichshafen (DE)
(72) Erfinder: Kutsche, Thomas, 97422 Schweinfurt (DE); Rappelt, Stefan, 97477 Gerolzhofen (DE); Hees, Eberhard, 97505 Geldersheim (DE)

(56) Entgegenhaltungen:
- EP-A2- 0 545 687
- DE-A1- 19 629 501
- DE-A1- 19 805 957
- DE-C1- 3 840 790
- JP-A- 11 028 922
- KR-B1- 100 341 742

## Beschreibung

Die Erfindung betrifft ein Verfahren zur Niveauregulierung bei einem Kraftfahrzeug gemäß dem Oberbegriff von Patentanspruch 1.

Aus der DE 35 24 862 A1 ist das Prinzip der Sky-hook-Regelung bekannt, bei dem durch den Einsatz Schwingungsdämpfern, die in der Einfahr- und in der Ausfahrrichtung der Kolbenstange in ihrer Dämpfkraft verstellbar sind, eine Horizontierung des Fahrzeugaufbaus erreicht werden soll. Der Grundgedanke besteht darin, dass die auftretenden Dämpfkräfte den Fahrzeugaufbau stabilisieren. In vereinfachter Form ist es ebenfalls bekannt, Nickbewegungen, z. B. beim Anfahren oder beim Bremsen durch eine gezielte Dämpfkraftverstellung in Richtung große Dämpfung z. B. an der Vorderachse beim Bremsvorgang zu erreichen.

Zur Niveauregulierung sind dem Anmelder als passive Elemente nur selbstpumpende Schwingungsdämpfer bekannt, die ein Pumpgestänge aufweisen, das Dämpfmedium aus einem internen Speicher in einen Arbeitsraum fördert. Beispielhaft wäre die DE 38 40 790 C1 zu nennen. In der Regel werden zur Niveauregulierung aktive Systeme, wie z. B. Luftfedern eingesetzt. Es ist auch bekannt, Luftfedern und verstellbare Schwingungsdämpfer in Kombination zu verwenden. Alternativ sind auch hydraulische Systeme wie z. B. eine Federtellerverstellung nach der DE 196 06 991 A1 zu nennen.

Aktive Niveauregulierungen sind nicht nur in der Anschaffung teuer, sondern benötigen Fremdenergie, die den Treibstoffverbrauch des Fahrzeugs negativ beeinflusst.

Zum technischen Umfeld wird auch auf die DE 196 29 501 und die JP 11 028 922 verwiesen.

Aufgabe der vorliegenden Erfindung ist es, mit einem vertretbaren Energieaufwand eine Niveauregulierung bei einem Fahrzeug zu realisieren.

Erfindungsgemäß wird die Aufgabe dadurch gelöst, dass ausgehend von der definierten Niveaulage einer Federungsbewegung des Fahrzeugaufbau eine in Richtung der Niveaulage weisende kleine Dämpfkraft und eine in Gegenrichtung wirksame große Dämpfkraft eingestellt wird, so dass im Schwingungsdämpferbetrieb aufgrund der alternierende Dämpfkrafteinstellung der Fahrzeugaufbau in Richtung der definierten Niveaulage bewegt wird.

Der große Vorteil besteht darin, dass man nur eine sehr kleine Energiemenge benötigt, um die verstellbaren Dämpfventile anzusteuern. Man nutzt praktisch einen Pumpeffekt aus, der von der Federungsbewegung des Fahrzeugrades zur Verfügung steht.

In weiterer vorteilhafter Ausgestaltung ist vorgesehen, dass für jede Bewegungsrichtung des Fahrzeugaufbaus ein separates Dämpfventil angesteuert wird. Die Schaltfrequenz für das einzelne Dämpfventil kann deutlich gesenkt werden.

Gemäß einem vorteilhaften Unteranspruch wird parallel zum verstellbaren Dämpfventil ein Überdruckventil verwendet, dessen Mindestöffnungskraft größer ist als die statische Last des Fahrzeugaufbaus. Das Überdruckventil kann z. B. von einem so genannten Bodenventil gebildet werden.

Um einen guten Fahrkomfort zu erzielen, kann die Niveauregulierung bei hochfrequenten Anregungen mit kleinen Amplituden abgeschaltet werden. Für den angestrebten Pumpeffekt ist es sinnvoller mehrere größere Radfederungsbewegungen auszunutzen als bei hochfrequenten Anregungen einen Komfortnachteil hinzunehmen, der nur eine vergleichsweise langsamere Pumpwirkung entfalten würde.

Anhand der folgenden Figurenbeschreibung soll die Erfindung näher erläutert werden.

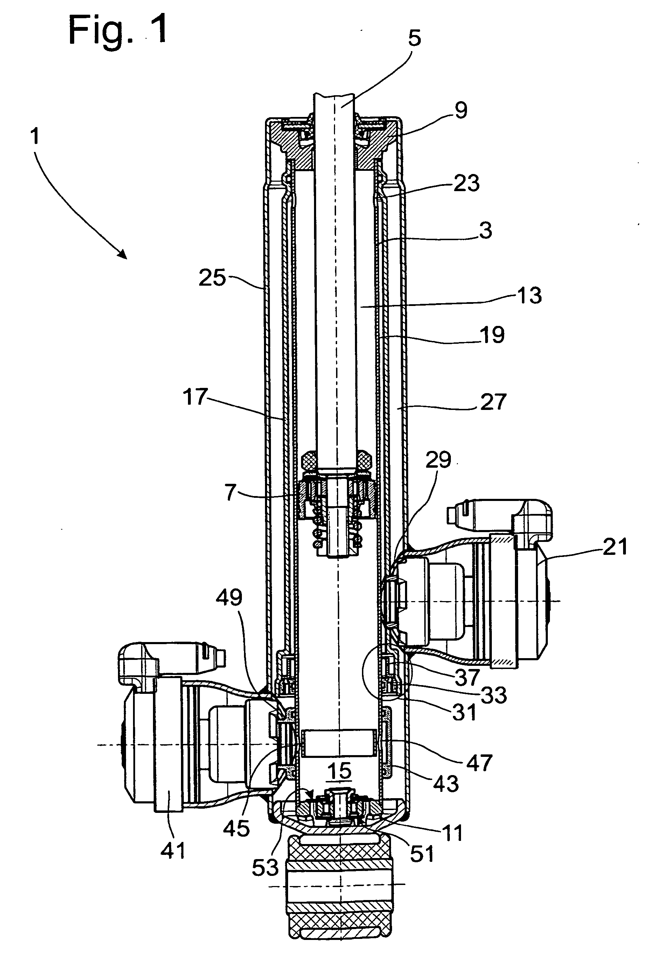

Die Fig. 1 zeigt einen verstellbaren Schwingungsdämpfer 1, der einen dämpfmittelgefüllten Zylinder 3 aufweist, in dem eine Kolbenstange 5 mit einem Kolben 7 axial beweglich geführt ist. Der Kolben 7 befindet sich in im Bereich einer definierten Niveaulage. Ein oberes Ende des Zylinders wird von einer Kolbenstangenführung 9 und ein unteres Ende von einem Boden 11 verschlossen. Der Kolben 5 unterteilt den Zylinder 3 in einen kolbenstangenseitigen und einen kolbenstangenfernen Arbeitsraum 13; 15. Ein außenseitig zum Zylinder 3 angeordnetes Rohr 17 und der Zylinder selbst bilden einen Ringraum, der als Fluidverbindung 19 zwischen dem kolbenstangenseitigen Arbeitsraum und einem verstellbaren Dämpfventil 21 fungiert. Dazu ist der Zylinder 3 mit einer Anschlussöffnung 23 versehen. Das Dämpfventil entspricht dem Aufbau, wie z. B. in der DE 196 24 898 C1 beschrieben ist.

Der gesamte Zylinder wird von einem Behälterrohr 25 eingehüllt, der mit dem Zylinder oder dem Rohr 17 einen Ausgleichsraum 27 begrenzt, der das Volumen der ein- und ausfahrenden Kolbenstange 5 kompensiert. Das Gehäuse des verstellbaren Dämpfventils ist am Behälterrohr 25 befestigt. Ein Rohrstutzen 29 sorgt für eine Anbindung des verstellbaren Dämpfventils 21 an die Fluidverbindung 19.

In der Fluidverbindung ist ein Rückschlagventil 31 angeordnet, das einen ringförmigen Ventilkörper 33 aufweist, der mit seinem Innendurchmesser dichtend, ggf. unterstützt durch eine separate Dichtung, auf der Außenseite des Zylinders 3 geführt ist. Der Ventilkörper 33 des Rückschlagventils ist endseitig in einer radialen Aufweitung 35 des Rohres 17 befestigt. Die Aufweitung ist axial länger ausgeführt als die Höhe des Ventilkörpers, so dass innerhalb der Aufweitung eine Ventilscheibe 37 axial beweglich gelagert werden kann. Das Rückschlagventil 31 öffnet in Strömungsrichtung vom Ausgleichsraum 27 in die Fluidverbindung 19, so dass bei einem sich vergrößernden Arbeitsraum 13 bei einer Einfahrbewegung der Kolbenstange in den Zylinder Dämpfmedium aus dem Ausgleichsraum über die Fluidverbindung und die Anschlussöffnung 23 in den kolbenstangenseitigen Arbeitsraum nachströmen kann.

Bei einer Ausfahrbewegung der Kolbenstange wird das Dämpfmedium aus dem kolbenstangenseitigen Arbeitsraum durch die Anschlussöffnung 23 und die Fluidenverbindung 19 zum verstellbaren Dämpfventil 21 gefördert. Das Rückschlagventil 31 ist geschlossen. Das gesamte Dämpfmedium aus dem kolbenstangenseitigen Arbeitsraum wird in das verstellbare Dämpfventil 21 verdrängt, dessen Ausgangsseite 39 an den Ausgleichsraum 27 anschlossen ist.

Der Schwingungsdämpfer 1 verfügt über ein zweites verstellbares Dämpfventil 41, das im konstruktiven Aufbau dem verstellbaren Dämpfventil 21 gleicht. Für das verstellbare Dämpfventil ist ebenfalls auf der Außenseite des Zylinders 3 ein zweites Rohr 43 geführt, das von dem Rohr 17 völlig getrennt ist und somit auch getrennte Fluidverbindungen 19; 45 vorliegen. Eine zweite Anschlussöffnung 47 im kolbenstangenseitigen Arbeitsraum 15 sorgt für einen direkten Zustrom über einen Rohrstutzen 49 in das verstellbare Dämpfventil 41, dessen Abströmseite ebenfalls im Ausgleichsraum 27 mündet.

Prinzipiell könnte der Kolben als einfacher Verdränger ohne Verbindungskanäle zwischen den Arbeitsräumen 13; 15 ausgeführt sein. Auch in dem Boden 11 müsste kein Druckbegrenzungsventil 51 angeordnet sein. Ein Rückschlagventil 53 sorgt bei einer Ausfahrbewegung der Kolbenstange für ein Nachströmen von Dämpfmedium aus dem Ausgleichsraum 27 in den kolbenstangenfernen Arbeitsraum 15.

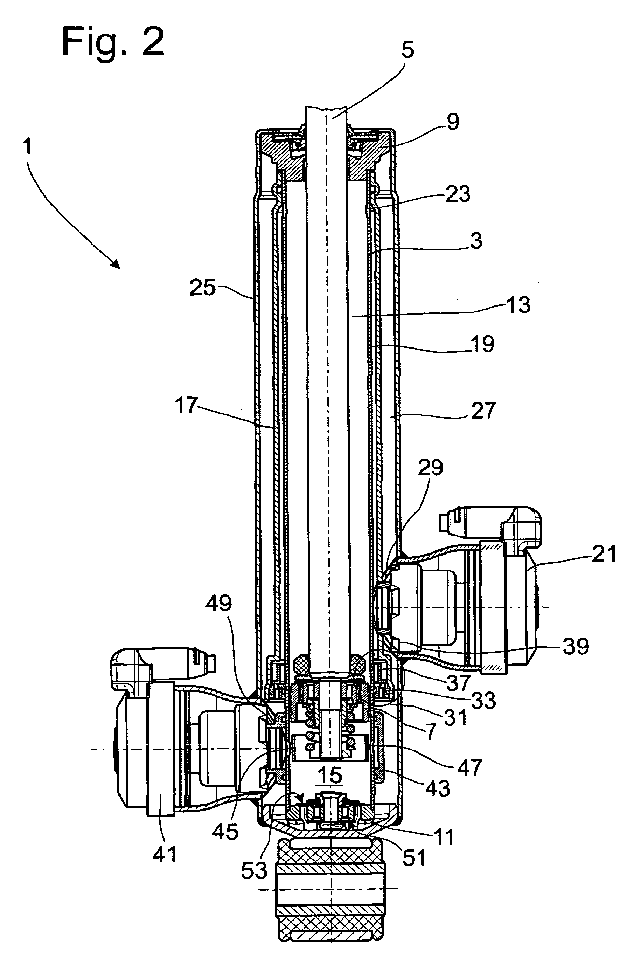

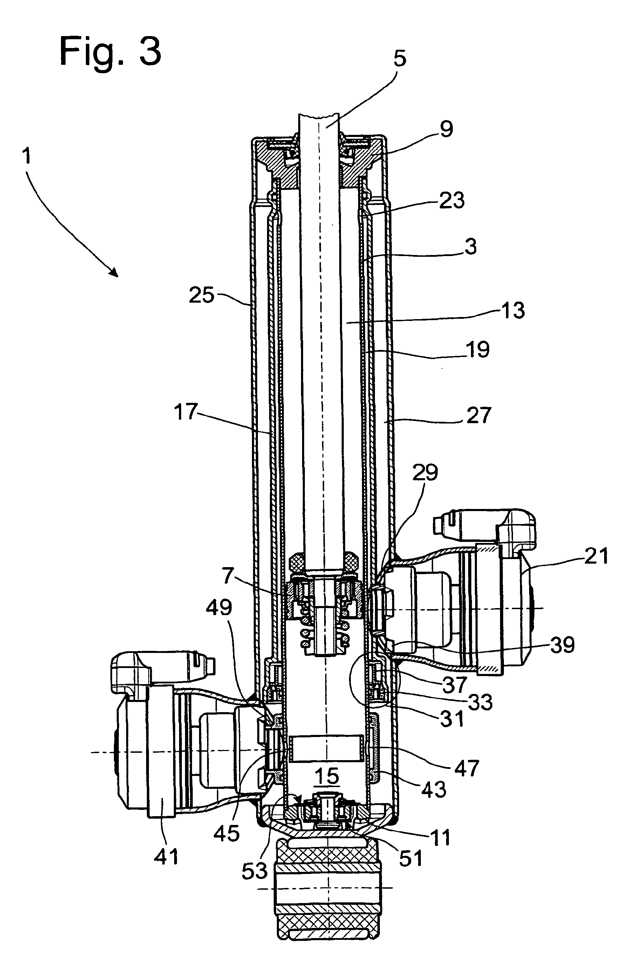

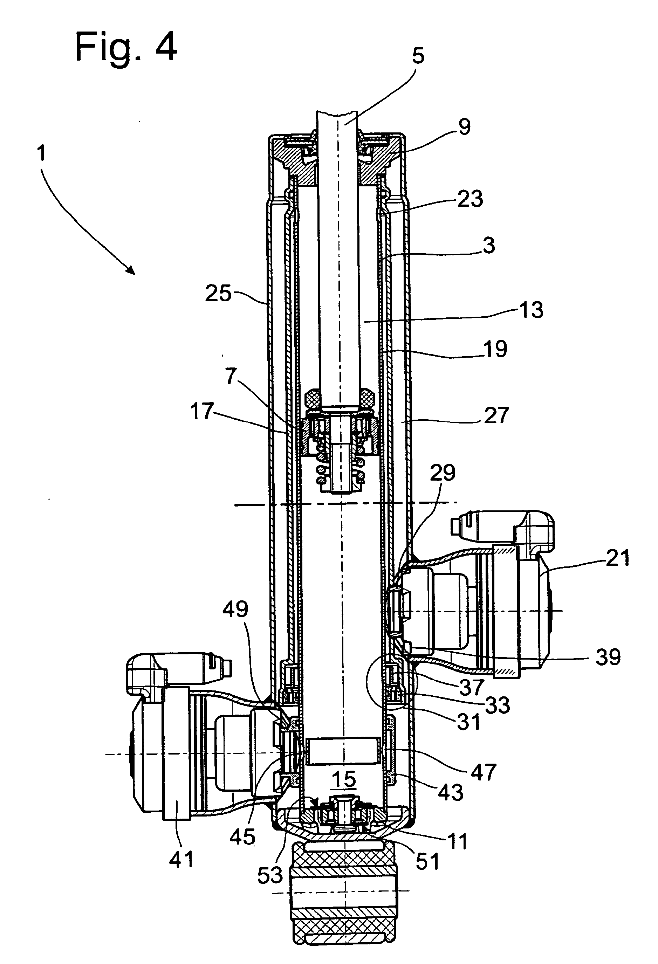

Die Niveaulage des Kolbens entspricht einer bestimmten Beladung. Liegt eine Abweichung vor, dann wird der Fahrzeugaufbau von nicht dargestellten Federn entweder angehoben oder der Fahrzeugaufbau senkt sich ab, wie z. B. in der Fig. 2 dargestellt ist. Von einer allgemein bekannten Niveausensiereinrichtung, die an beliebiger Stelle zwischen dem Fahrzeugaufbau und dem Rad angeordnet sein kann, lässt sich feststellen, dass der Fahrzeugaufbau abgesenkt und die Kolbenstange in Richtung des kolbenstangenfernen Arbeitsraums eingefahren ist. Bei einer Ausfederungsbewegung des Rades zum Fahrzeugaufbau bewegt sich die Kolbenstange beispielsweise in die in Fig. 3 dargestellte Position. Während der Ausfahrbewegung ist das verstellbare Dämpfventil 21 auf eine weiche Dämpfkraftkennlinie, hingegen das weitere verstellbare Dämpfventil 41 auf eine harte Dämpfkraftkennlinie eingestellt. Bei einem konventionellen Schwingungsdämpfer ist die Dämpfkraft in der Regel in Ausfahrrichtung stets härter eingestellt als in Einfahrrichtung der Kolbenstange. Der Kolbenstangenbewegung in Richtung der definierten Niveaulage soll aber nur ein geringstmöglicher Widerstand entgegengesetzt werden. In Einfahrrichtung soll die Dämpfkraft des Dämpfventils 41 jedoch als Stützkraft für den Fahrzeugaufbau verwendet werden.

Wird die definierte Niveaulage in Ausfahrrichtung überfahren, werden das Dämpfventil 21 in Richtung einer größeren Dämpfkraft und das Dämpfventil 41 tendenziell in Richtung kleinerer Dämpfkraft verstellt, damit die Dämpfkraft die Kolbenstange mit dem Kolben in Richtung der definierten Niveaulage abstützt. Um den Pumpeffekt der Dämpfventile 21; 41 optimal ausnutzen zu können, ist z. B. das Bodenventil 53 mit einer Öffnungskraft ausgelegt, die anteilig der statischen Last des Fahrzeugaufbaus entspricht. Der Pumpeffekt ist besonders bei großen Kolbenstangenbewegungen effektiv. Deshalb kann das beschriebene Verfahren der Ansteuerung der beiden Dämpfventile bei hochfrequenten Anregungen mit kleinen Amplituden abgeschaltet werden.

## Patentansprüche

1. Verfahren zum Betrieb von verstellbaren Schwingungsdämpfern an einem Kfz, wobei die Niveaulage eines Fahrzeugaufbaus erfasst und in Abhängigkeit der Niveaulage Stellkräfte auf den Fahrzeugaufbau ausgeübt werden, um eine definierte Niveaulage zu erreichen,
**dadurch gekennzeichnet,**
**dass** ausgehend von der definierten Niveaulage einer Federungsbewegung des Fahrzeugaufbaus eine in Richtung der definierten Niveaulage weisende kleine Dämpfkraft und eine in Gegenrichtung wirksame große Dämpfkraft eingestellt wird, so dass im Schwingungsdämpferbetrieb aufgrund der alternierenden Dämpfkrafteinstellung der Fahrzeugaufbau in Richtung der definierten Niveaulage bewegt wird.

2. Verfahren nach Anspruch 1,
**dadurch gekennzeichnet,**
**dass** für jede Bewegungsrichtung des Fahrzeugaufbaus ein separates Dämpfventil (21; 41) angesteuert wird.

3. Verfahren nach Anspruch 1,
**dadurch gekennzeichnet,**
**dass** parallel zum verstellbaren Dämpfventil (21; 41) ein Überdruckventil (53) verwendet wird, dessen Mindestöffnungskraft größer ist als die statische Last des Fahrzeugaufbaus.

4. Verfahren nach Anspruch 1,
**dadurch gekennzeichnet,**
**dass** die Niveauregulierung bei hochfrequenten Anregungen mit kleinen Amplituden abgeschaltet ist.

## Claims

1. Method for operating adjustable vibration dampers on a motor vehicle, wherein the ride level of a vehicle body is detected and actuating forces are applied to the vehicle body as a function of the ride level in order to bring about a defined ride level,
**characterized**
**in that** on the basis of the defined ride level of a spring movement of the vehicle body a small damping force which points in the direction of the defined ride level and a large damping force which is active in the opposite direction are set, with the result that in the vibration damper mode the vehicle body is moved in the direction of the defined ride level on the basis of the alternating damping force setting.

2. Method according to Claim 1
**characterized**
**in that** a separate damping valve (21, 41) is actuated for each direction of movement of the vehicle body.

3. Method according to Claim 1,
**characterized**
**in that** an excess pressure valve (53), whose minimum opening force is larger than the static load of the vehicle body, is used in parallel with the adjustable damping valve (21; 41).

4. Method according to Claim 1,
**characterized**
**in that** the ride level adjustment means is switched off in the case of high-frequency excitations with small amplitudes.

## Revendications

1. Procédé pour faire fonctionner des amortisseurs d'oscillation réglables dans un véhicule automobile, la position du niveau d'une caisse d'un véhicule étant détectée et en fonction de la position du niveau, des forces de réglage étant exercées sur la caisse du véhicule afin d'obtenir une position de niveau définie,
**caractérisé en ce que**
partant de la position de niveau définie d'un mouvement de suspension de la caisse du véhicule, une petite force d'amortissement orientée dans la direction de la position de niveau définie et une grande force d'amortissement agissant dans le sens inverse sont ajustées de telle sorte que pendant le fonctionnement de l'amortisseur d'oscillations, du fait de l'ajustement alterné de la force d'amortissement, la caisse du véhicule soit déplacée dans la direction de la position de niveau définie.

2. Procédé selon la revendication 1,
**caractérisé en ce que**
pour chaque direction de déplacement de la caisse de véhicule, une soupape d'amortissement séparée (21 ; 41) est commandée.

3. Procédé selon la revendication 1,
**caractérisé en ce que**
parallèlement à la soupape d'amortissement réglable (21 ; 41), une soupape de surpression (53) est utilisée, dont la force d'ouverture minimale est supérieure à la charge statique de la caisse du véhicule.

4. Procédé selon la revendication 1,
**caractérisé en ce que**
la régulation du niveau est coupée à des excitations de hautes fréquences et de petites amplitudes.
